# EUROPEAN PATENT APPLICATION

(11) **EP 4 852 113 A1**
(43) Date of publication of application: **09.12.2026**
(21) Application number: 25748360.2
(22) Date of filing: 17.01.2025
(51) Int. Cl.: H01M 10/04, H01M 4/38, H01M 10/0587, H01M 50/107, H01M 50/152, H01M 50/167, H01M 50/184, H01M 50/538, H01M 50/545

(54) **CYLINDRICAL SECONDARY BATTERY**

(30) Priority: 31.01.2024 JP 2024012654
(71) Applicant: Panasonic Intellectual Property Management Co., Ltd., Kadoma-shi, Osaka 571-0057 (JP)
(72) Inventor: KITTAKA, Akinobu, kadoma-shi, Osaka 571-0057 (JP); MIZUKOSHI, Fumikazu, kadoma-shi, Osaka 571-0057 (JP); YAMAMOTO, Norihisa, kadoma-shi, Osaka 571-0057 (JP)
(74) Representative: Eisenführ Speiser
(86) International application number: PCT/JP2025/001310
(87) International publication number: WO 2025/164364

(57) **Abstract**

A positive electrode (11) has one or more positive-electrode core exposed parts which are each adjacent to a positive electrode mixture layer in the positive electrode width direction and, in each of which, a positive electrode core is exposed. Positive electrode tabs (20) are joined to the positive-electrode core exposed parts one by one. At least a portion of a negative-electrode core body exposed part (43) comes into contact with the inner circumferential surface of an exterior can. A tape is attached to the outermost circumferential surface of an electrode body (14) so as to extend across at least a portion of a winding outer end (12a) of a negative electrode (12). The winding outer end (12a) of the negative electrode (12) is positioned outside a winding outer end (11a) of the positive electrode (11) by a length exceeding one turn.

## Description

### TECHNICAL FIELD

The present disclosure relates to a cylindrical secondary battery.

### BACKGROUND ART

Among conventional cylindrical secondary batteries, there is a cylindrical secondary battery disclosed in PATENT LITERATURE 1. This cylindrical secondary battery comprises an electrode assembly of an elongated positive electrode and an elongated negative electrode that are wound with a separator interposed therebetween, a housing can that houses the electrode assembly, and a sealing assembly with which an opening on one side of the housing can in a height direction is capped. The positive electrode has an elongated positive electrode core and a positive electrode mixture layer disposed on the positive electrode core, and the negative electrode has an elongated negative electrode core and a negative electrode mixture layer disposed on the negative electrode core. A plurality of positive electrode tabs have respective one end portions joined to the positive electrode at an interval in a positive electrode longitudinal direction, and the respective other end portions joined to an inner surface of the sealing assembly. In this cylindrical battery, a current path in the positive electrode longitudinal direction is shortened, so that an electrical resistance can be reduced.

### CITATION LIST

### PATENT LITERATURE

PATENT LITERATURE 1: Japanese Unexamined Patent Application Publication No. 2003-7346

### SUMMARY

When a part of the positive electrode mixture layer is disposed to be adjacent, in a positive electrode width direction, to a positive electrode core exposed portion to which the positive electrode tab is joined, the capacity is increased and the battery performance is improved. In addition, when the outermost circumferential negative electrode core contacts an inner circumferential surface of the housing can so that the outermost circumference of the electrode assembly includes the negative electrode core, an electrical resistance of the battery is reduced and heat radiation is improved.

However, the present inventors have found that as described in detail later, when an increase in capacity as well as a reduction in electrical resistance and improvement in heat radiation are achieved by adopting the above-described configurations, a gap may be generated between a winding outer side end portion of the positive electrode and a negative electrode mixture layer portion facing the winding outer side end portion of the positive electrode, and the generated gap may cause precipitation of lithium around the negative electrode mixture layer portion. When the lithium is precipitated, the separator may be damaged. It is an advantage of the present disclosure to provide a cylindrical secondary battery that facilitates an increase in capacity and an reduction in electrical resistance and in which precipitation of lithium on an outer circumferential side of an electrode assembly can be reduced.

In order to solve the above-described problem, a cylindrical secondary battery according to the present disclosure comprises an electrode assembly of an elongated positive electrode and an elongated negative electrode that are wound with a separator interposed between the positive electrode and the negative electrode, a housing can that houses the electrode assembly, and a sealing assembly that is crimp-fixed to an opening portion of the housing can via a gasket, in which the positive electrode has an elongated positive electrode core and a positive electrode mixture layer disposed on the positive electrode core, the negative electrode has an elongated negative electrode core and a negative electrode mixture layer disposed on the negative electrode core, the positive electrode has one or more positive electrode core exposed portions, the positive electrode core exposed portions each being adjacent to the positive electrode mixture layer in a positive electrode width direction and exposing the positive electrode core, one positive electrode tab is joined to each of the positive electrode core exposed portions, a negative electrode core exposed portion exposing the negative electrode core constitutes at least a winding outer side end portion on an outermost circumference of the electrode assembly, at least a part of the negative electrode core exposed portion contacts an inner circumferential surface of the housing can, a tape is attached to an outermost circumferential surface of the electrode assembly so as to extend across at least a part of an winding outer end of the negative electrode, and the winding outer end of the negative electrode is located further on a winding outer side than a winding outer end of the positive electrode by a length exceeding one turn.

In this specification, a winding outer end of an electrode (a positive electrode, a negative electrode) is defined as an edge on a winding outer side of the electrode in an electrode longitudinal direction, and a winding inner end of the electrode is defined as an edge on a winding inner side of the electrode in the electrode longitudinal direction.

The winding outer end of the negative electrode being located further on the winding outer side than the winding outer end of the positive electrode by a length exceeding one turn is consistent with a circumferential length from a first point located in a facing portion on a winding outermost side in the negative electrode that radially faces the winding outer end of the positive electrode to a second point located on a winding outermost side in the winding outer end of the negative electrode being a length exceeding one turn.

According to the cylindrical secondary battery according to the present disclosure, an increase in capacity and a reduction in electrical resistance are facilitated, and precipitation of lithium on an outer circumferential side of an electrode assembly can be reduced.

### BRIEF DESCRIPTION OF DRAWING

FIG. 1 is an axial sectional view of a cylindrical secondary battery according to one embodiment of the present disclosure.
FIG. 2 is a perspective view illustrating an electrode assembly and parts of positive electrode tabs.
FIG. 3 is a plan view illustrating a winding inner surface of a positive electrode.
FIG. 4 is a schematic and radial sectional view of a portion corresponding to an α layer of an electrode assembly before charging of a cylindrical secondary battery of Comparative Example.
FIG. 5 is a perspective view of the electrode assembly before charging of the cylindrical secondary battery of Comparative Example.
FIG. 6 is a schematic and radial sectional view of the portion corresponding to the α layer of the electrode assembly during charging of the cylindrical secondary battery of Comparative Example.
FIG. 7 is a perspective view of the electrode assembly during charging of the cylindrical secondary battery of Comparative Example.
FIG. 8 is a schematic and radial sectional view of the portion corresponding to the α layer of the electrode assembly during discharging of the cylindrical secondary battery of Comparative Example.
FIG. 9 is a schematic sectional view corresponding to FIG. 8 in a cylindrical secondary battery of an embodiment.
FIG. 10 is a diagram for explaining structures of the electrode assembly of the cylindrical battery of Comparative Example and the electrode assemblies of the cylindrical batteries of Examples 1 to 6.

### DESCRIPTION OF EMBODIMENTS

Hereinafter, an embodiment of a cylindrical battery according to the present disclosure will be described in detail with reference to the drawings. The cylindrical secondary battery of the present disclosure may be a battery using an aqueous electrolyte, or may be a battery using a non-aqueous electrolyte. In the following, a cylindrical lithium ion secondary battery using a non-aqueous electrolyte will be exemplified as a cylindrical secondary battery 10 of one embodiment, but the cylindrical secondary battery of the present disclosure is not limited to this.

In a case where a plurality of embodiments and modifications and the like are included in the following description, it is assumed from the beginning that a new embodiment is constructed by appropriately combining those feature portions. In the following embodiments, the same components are denoted by the same reference numerals in the drawings, and duplicate descriptions are omitted. Schematic diagrams are included in a plurality of the drawings, and the dimensional ratios such as lengths, widths and heights of each member between different drawings are not necessarily the same. In this specification, a sealing assembly 17 side in an axial direction (height direction) of the cylindrical secondary battery 10 is defined as "upper", and a bottom 68 side of a housing can 16 in the axial direction is defined as "lower".

In this specification, the number of turns (circumferential length) of an electrode (a positive electrode, a negative electrode) is defined as follows. In a cross section of the cylindrical secondary battery in a round slicing direction (a cross section including a radial direction of the cylindrical battery), a center of a circle based on an outer diameter of the housing can is defined as a center of polar coordinates, and a position of a point on a winding innermost side at a winding inner end of the electrode is defined as 0 degrees. At this time, when a change in angle when the angle is advanced from a reference point of the electrode in the electrode longitudinal direction is defined as θ, the formula θ ÷ 360 is defined as the number of turns. For example, the position advanced by 1080 degrees becomes 1080 ÷ 360 = 3.0 turns (circumferential length of 3.0 turns). In the electrode, the angles of portions where the positions in the electrode longitudinal direction are the same are defined as being identical.

Of the components described below, components that are not described in the independent claim indicating the highest level concept are arbitrary components, and are not essential components. The present disclosure is not limited to the following embodiment and modifications thereof, and various improvements and changes are possible within the matters described in the claims of the present application and the scope of equivalence of claims.

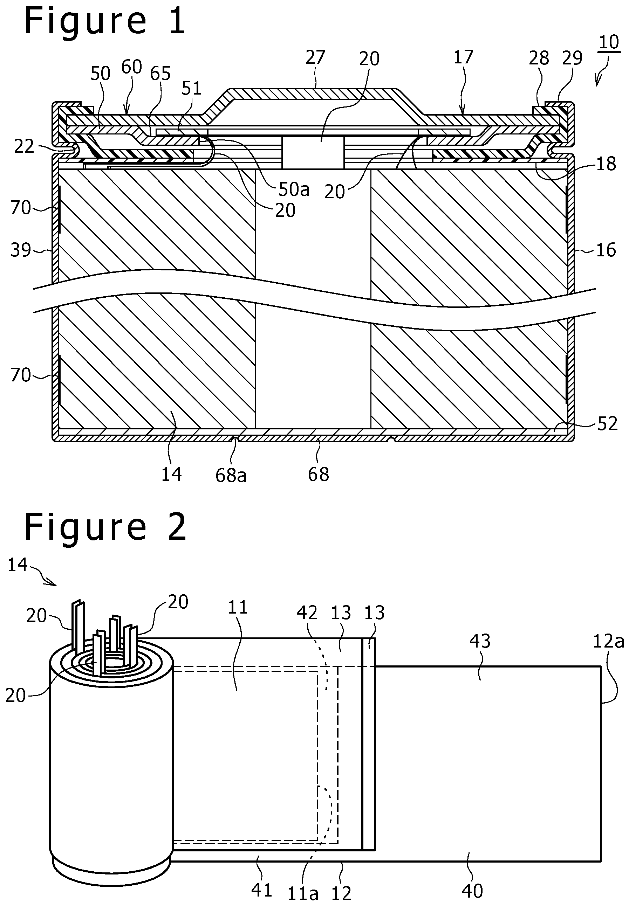

FIG. 1 is an axial sectional view of the cylindrical secondary battery 10 according to one embodiment of the present disclosure. As illustrated in FIG. 1, the cylindrical secondary battery (hereinafter, simply referred to as a battery) 10 comprises a wound-type electrode assembly 14, a non-aqueous electrolyte (not illustrated), a bottomed cylindrical metallic housing can 16 that houses the electrode assembly 14 and the non-aqueous electrolyte, and a sealing assembly 17 that is crimp-fixed to an opening portion of the housing can 16 via a gasket 28.

The non-aqueous electrolyte has ion conductivity (for example, lithium ion conductivity). The non-aqueous electrolyte may be a liquid electrolyte (electrolytic solution), or may be a solid electrolyte. The liquid electrolyte (electrolytic solution) includes a non-aqueous solvent, and an electrolyte salt dissolved in the non-aqueous solvent. For the non-aqueous solvent, for example, esters, ethers, nitriles, amides, mixed solvents containing two or more selected from the foregoing, and the like may be used. Examples of the non-aqueous solvent include ethylene carbonate (EC), ethyl methyl carbonate (EMC), dimethyl carbonate (DMC), diethyl carbonate (DEC), and mixed solvents containing the foregoing. The non-aqueous solvent may contain a halogen-substituted product (for example, fluoroethylene carbonate) obtained by substituting at least some of hydrogen atoms in these solvents with a halogen atom such as fluorine. For the electrolyte salt, a lithium salt such as LiPF₆ is used.

As the solid electrolyte, for example, a solid or gelled polymer electrolyte, or an inorganic solid electrolyte is used. The polymer electrolyte include, for example, a lithium salt and a matrix polymer, or a non-aqueous solvent, a lithium salt, and a matrix polymer. As the matrix polymer, for example, a polymer material which absorbs and gels the non-aqueous solvent is used. As the polymer material, for example, fluororesin, acrylic resin, polyether resin, or the like is used. As the inorganic solid electrolyte, for example, a material (for example, an oxide-based solid electrolyte, a sulfide-based solid electrolyte, or a halide-based solid electrolyte) known in an all-solid-state lithium ion secondary battery and the like is used.

FIG. 2 is a perspective view illustrating the electrode assembly 14 and parts of positive electrode tabs 20. As illustrated in FIG. 2, the electrode assembly 14 has an elongated positive electrode 11, an elongated negative electrode 12, and two elongated separators 13, and has a wound structure of the positive electrode 11 and the negative electrode 12 that are wound with two elongated separators 13 each interposed between the positive electrode 11 and the negative electrode 12. To the positive electrode 11, one or more positive electrode tabs 20 are joined, and six or more positive electrode tabs 20 are preferably joined, and in the present embodiment, eight positive electrode tabs 20 are joined to the positive electrode 11 at an interval in the positive electrode longitudinal direction.

The negative electrode 12 is formed to be one size larger than the positive electrode 11 in order to prevent precipitation of lithium. The negative electrode 12 is formed to be longer in the winding direction and the axial direction than the positive electrode 11. The two separators 13 are each formed to be one size larger than the positive electrode 11, and are disposed so as to interpose the positive electrode 11 therebetween. The separators 13 protrude upward from the positive electrode 11 and the negative electrode 12, and the negative electrode 12 protrudes downward from the positive electrode 11 and the separators 13.

The negative electrode 12 has a negative electrode core exposed portion 41 at a lower axial end portion (a lower end portion in a negative electrode width direction) extending from a winding inner end to a winding outer end in the negative electrode longitudinal direction of the elongated negative electrode 12, the negative electrode core exposed portion 41 being not provided with a negative electrode mixture layer 42 in a negative electrode core 40. The lower axial end portion of the electrode assembly 14 is formed of the negative electrode core exposed portion 41. In addition, the outermost circumference of the electrode assembly 14 has a negative electrode core exposed portion 43 at at least a winding outer side end portion. At least a part of the negative electrode core exposed portion 43 contacts an inner circumferential surface of the housing can 16.

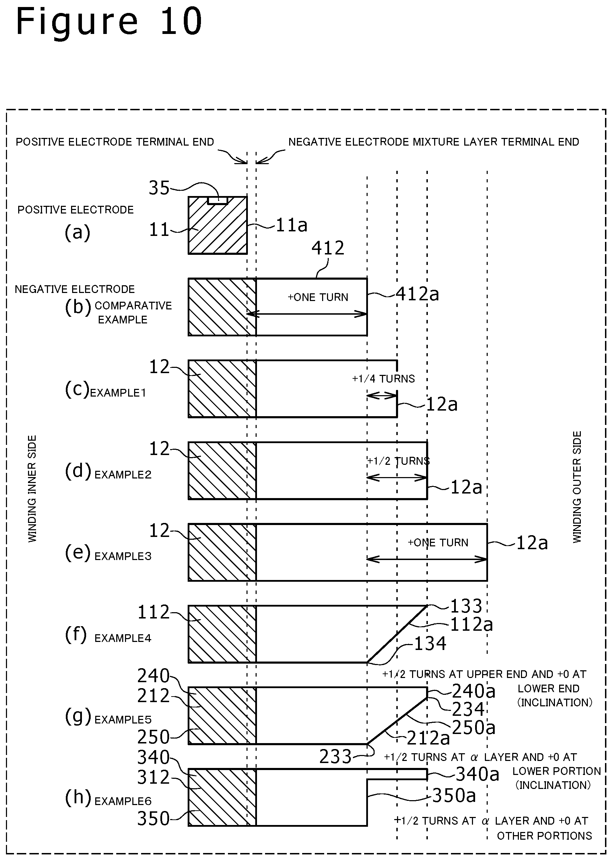

A winding outer end 12a of the negative electrode 12, that is, an edge on the winding outer side of the negative electrode 12 in the negative electrode longitudinal direction is located further on the winding outer side than a winding outer end 11a of the positive electrode, that is, an edge on the winding outer side of the positive electrode 11 in the positive electrode longitudinal direction by a length exceeding one turn. In the present embodiment, the winding outer end 12a of the negative electrode 12, that is, the edge on the winding outer side of the negative electrode 12 in the negative electrode longitudinal direction extends in the negative electrode longitudinal direction as a whole. However, the winding outer end of the negative electrode (the edge on the winding outer side of the negative electrode in the negative electrode longitudinal direction) may include a portion inclined with respect to the negative electrode longitudinal direction. A preferable length from the winding outer end of the positive electrode to the winding outer end of the negative electrode and a preferable shape of the winding outer end of the negative electrode will be described in detail later with reference to FIG. 10. The negative electrode 12 may include a winding inner end of the electrode assembly 14. However, in general, the separator 13 extends beyond the winding inner end of the negative electrode 12, and a winding inner end of the separator 13 serves as the winding inner end of the electrode assembly 14.

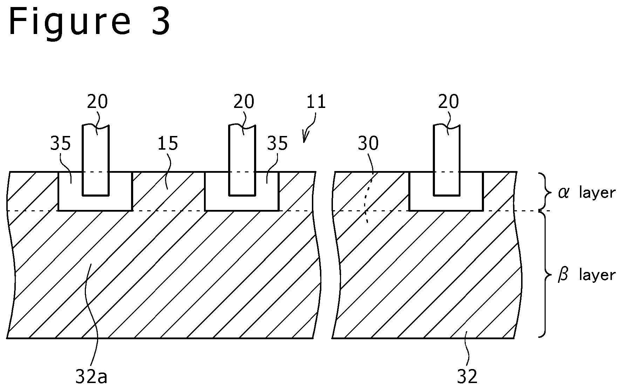

The positive electrode 11 has a positive electrode core 30 (see FIG. 3), and a positive electrode mixture layer 32 (see FIG. 3) formed on each surface of the positive electrode core 30. For the positive electrode core 30, a foil of metal such as aluminum or an aluminum alloy, which is stable within a potential range of the positive electrode 11, a film in which such a metal is disposed on a surface layer thereof, or the like can be used. The positive electrode mixture layer 32 includes a positive electrode active material, a conductive agent, and a binder. The positive electrode 11 can be produced by, for example, applying a positive electrode mixture slurry including a positive electrode active material, a conductive agent, a binder, and the like on a positive electrode core 30, drying the resulting coating film, and then compressing the coating film to form a positive electrode mixture layer 32 on each surface of the positive electrode core 30.

The positive electrode active material is composed of a lithium-containing metal composite oxide as a main component. Examples of metal elements contained in the lithium-containing metal composite oxide include Ni, Co, Mn, Al, B, Mg, Ti, V, Cr, Fe, Cu, Zn, Ga, Sr, Zr, Nb, In, Sn, Ta, and W. An example of a preferable lithium-containing metal composite oxide is a composite oxide containing at least one of the group consisting of Ni, Co, Mn and Al.

Examples of the conductive agent included in the positive electrode mixture layer 32 may include carbon materials such as carbon black such as acetylene black and Ketjenblack, and graphite. Examples of the binder included in the positive electrode mixture layer 32 may include fluororesins such as polytetrafluoroethylene (PTFE) and polyvinylidene fluoride (PVdF), polyacrylonitrile (PAN), polyimide resins, acrylic resins, and polyolefin resins. These resins may be used in combination with cellulose derivatives such as carboxymethyl cellulose (CMC) or a salt thereof, a polyethylene oxide (PEO), or the like. In order to increase the capacity, the length of the positive electrode 11 in the positive electrode longitudinal direction is preferably greater than or equal to 3000 mm.

FIG. 3 is a plan view illustrating a winding inner surface 15 of the positive electrode 11, and a plan view for explaining, in the positive electrode 11, forming positions and structures of positive electrode core exposed portions 35 to which the respective positive electrode tabs 20 are joined. In FIG. 3, a region indicated by oblique hatching is an arrangement region of the positive electrode mixture layer 32. In the present embodiment, a case will be described where the positive electrode tabs 20 are joined to the winding inner surface 15 of the positive electrode 11, but the positive electrode tabs may be joined to a winding outer surface of the positive electrode.

As illustrated in FIG. 3, the positive electrode 11 has one or more positive electrode core exposed portions 35, each of which is adjacent to the positive electrode mixture layer 32 in a positive electrode width direction and exposes the positive electrode core 30, and in the present embodiment, the positive electrode 11 has eight positive electrode core exposed portions 35. To shorten a current collecting path on the positive electrode side to effectively reduce an electrical resistance, the number of positive electrode core exposed portions 35, each of which is adjacent to the positive electrode mixture layer 32 in the positive electrode width direction and exposes the positive electrode core 30, is preferably greater than or equal to 6.

One positive electrode tab 20 is joined to each of the positive electrode core exposed portions 35. A part 32a of the positive electrode mixture layer 32 is disposed to be adjacent, in the positive electrode width direction, to the positive electrode core exposed portion 35, so that the capacity is increased. The center positions of the eight positive electrode core exposed portions 35 in the positive electrode longitudinal direction are preferably arranged with substantially equal intervals in the positive electrode longitudinal direction. The positive electrode tab 20 is preferably joined to the positive electrode core exposed portion 35 by means of ultrasonic welding or the like in a state in which a center position of the positive electrode tab 20 in its width direction substantially coincides with the center position of the corresponding positive electrode core exposed portion 35 in the positive electrode longitudinal direction. The positive electrode tabs 20 are each covered with, for example, an insulating tape (not illustrated), so that a short circuit between the positive electrode 11 and the negative electrode 12 is reduced. The insulating tape preferably cover each of the positive electrode core exposed portions 35.

As illustrated in FIG. 2, the negative electrode 12 has the negative electrode core 40, and the negative electrode mixture layer 42 formed on each surface of the negative electrode core 40. For the negative electrode core 40, a foil of metal such as copper or a copper alloy, which is stable within a potential range of the negative electrode 12, a film in which such a metal is disposed on a surface layer thereof, or the like can be used. The negative electrode mixture layer 42 includes a negative electrode active material, and a binder. The negative electrode 12 can be produced by, for example, applying a negative electrode mixture slurry including a negative electrode active material, a binder, and the like on a negative electrode core 40, drying the resulting coating film, and then compressing the coating film to form a negative electrode mixture layer 42 on each surface of the negative electrode core 40.

As the negative electrode active material, a carbon material that reversibly occludes and releases lithium ions is generally used. A preferable carbon material is graphite including natural graphite such as flaky graphite, massive graphite, and earthy graphite, and artificial graphite such as massive artificial graphite and graphitized mesophase carbon microbeads. The negative electrode active material of the negative electrode mixture layer 42 preferably includes a silicon (Si) material containing Si particles. For the negative electrode active material, a metal alloyed with lithium other than Si, an alloy containing such a metal, a compound containing such a metal, or the like may be used.

For the binder included in the negative electrode mixture layer 42, fluororesins, PAN, polyimide resins, acrylic resins, polyolefin resins, or the like may be used as in the case of the positive electrode 11, and a styrene-butadiene rubber (SBR) or a modification thereof is preferably used. In the negative electrode mixture layer 42, for example, in addition to SBR and the like, CMC or a salt thereof, polyacrylic acid (PAA) or a salt thereof, polyvinyl alcohol, or the like may be included.

A porous sheet having ion permeability and an insulation property is used for the separator 13. Specific examples of the porous sheet include a microporous thin film, a woven fabric, and a nonwoven fabric. The material of the separator 13 is preferably a polyolefin resin such as polyethylene or polypropylene, a cellulose, or the like. The separator 13 may be either a single layer structure or a laminated structure. A heat-resistant layer or the like may be formed on a surface of the separator 13.

As illustrated in FIG. 1, the battery 10 comprises an annular insulating plate 18 on an upper side of the electrode assembly 14. The positive electrode tab 20 attached to the positive electrode 11 extends toward the sealing assembly 17 side through a through hole in the insulating plate 18. The sealing assembly 17 has an upper current collecting plate 50, and a terminal cap 27. The upper current collecting plate 50 is a metallic annular plate member, and has a through hole 50a at a radial center portion.

The terminal cap 27 is a metallic plate member having no through hole, and is located on an upper side of the sealing assembly 17 in the axial direction. An end surface of the terminal cap 27 on the upper side in the axial direction is exposed to the outside except for an outer edge portion thereof, and the exposed portion constitutes a positive electrode terminal. The sealing assembly 17 further has a metal plate 51. The metal plate 51 is a metallic annular member and has a through hole.

Each positive electrode tab 20 is bent along an upper surface of the upper current collecting plate 50 through the through hole 50a in the upper current collecting plate 50 from the positive electrode 11. A leading end portion of each positive electrode tab 20 is in a state of being sandwiched between the upper surface of the upper current collecting plate 50 and a lower surface of the metal plate 51. Each positive electrode tab 20 is joined to the upper surface of the upper current collecting plate 50. The upper current collecting plate 50 and the metal plate 51 are also joined to each other, and each positive electrode tab 20 and the metal plate 51 are also joined to each other. These joining operations can be performed, for example, by emitting laser light to the metal plate 51 in the axial direction from above to perform laser welding in a state in which the leading end portion of each positive electrode tab 20 is sandwiched between the upper current collecting plate 50 and the metal plate 51. By performing the laser welding in a state in which the leading end portions of the positive electrode tabs 20 are sandwiched between the upper current collecting plate 50 and the metal plate 51, the positive electrode tabs 20 can be securely and easily welded and joined to the upper current collecting plate 50.

The sealing assembly 17 has a laminating portion 60 in which the terminal cap 27 and the upper current collecting plate 50 are laminated on an outer circumferential edge portion. When the laser light is emitted to the laminating portion 60 from above, the terminal cap 27 and the upper current collecting plate 50 are laser-welded and electrically connected. The annular upper surface of the upper current collecting plate 50 has an annular recessed portion 65 inside the laminating portion 60 in the radial direction. Since the upper surface of the upper current collecting plate 50 has the recessed portion 65 recessed downward, a space is provided between the terminal cap 27 and the recessed portion 65 of the upper current collecting plate 50. Each positive electrode tab 20 is joined to the upper current collecting plate 50 in the recessed portion 65. The upper current collecting plate 50 need not be joined to the metal plate 51, and the positive electrode tabs 20 need not be joined to the metal plate 51. In addition, the battery need not have the metal plate 51. Alternatively, the positive electrode tabs 20 may be joined to the lower surface of the upper current collecting plate 50.

The battery 10 comprises a metallic lower current collecting plate 52 on a lower side of the electrode assembly 14 in the axial direction. With reference to FIGS. 1 and 2, by emitting laser light from a lower surface side of the lower current collecting plate 52 in a state in which the electrode assembly 14 is pressed against an upper surface of the lower current collecting plate 52 so as to tilt the elongated negative electrode core exposed portion 41 inward in the radial direction, the negative electrode core exposed portion 41 is laser-welded and joined to the upper surface of the lower current collecting plate 52 over a wide range. By emitting the laser light from a lower side of the housing can 16, the bottom 68 of the housing can 16 is laser-welded and joined to the lower current collecting plate 52. Thus, the negative electrode 12 of the electrode assembly 14 is electrically connected to the housing can 16 via the lower current collecting plate 52. By joining the negative electrode core exposed portion 41 to the upper surface of the lower current collecting plate 52 over the wide range, the current can be prevented from flowing for a long distance along the negative electrode longitudinal direction of the elongated negative electrode 12, and an electrical resistance of the battery 10 can be reduced. Furthermore, as described above, at least a part of the negative electrode core exposed portion 43 provided on the outermost circumference of the electrode assembly 14 contacts the inner circumferential surface of the housing can 16. Therefore, in the outermost circumference of the electrode assembly 14, the negative electrode core 40 can be brought into contact with the housing can 16 over a wide range, and also for this reason, the electrical resistance of the battery 10 can be reduced.

A case has been described where the negative electrode core exposed portion 41 is electrically connected to the housing can 16 via the lower current collecting plate 52. However, it is only required that at least a part of the negative electrode core exposed portion 43 provided on the outermost circumference of the electrode assembly 14 contacts the inner circumferential surface of the housing can 16, and the lower end portion of the electrode assembly 14 need not be constituted of the band-shaped negative electrode core exposed portion 41. For example, the negative electrode may have a winding inner side core exposed portion exposing the negative electrode core, in a winding inner side end portion in the negative electrode longitudinal direction. Then, one end portion of a negative electrode lead may be joined to the winding inner side core exposed portion, and the other end portion of the negative electrode lead may be joined to a bottom inner surface of the housing can.

As illustrated in FIG. 1, the housing can 16 has a cylindrical portion 39 and the bottom 68, and the cylindrical portion 39 includes an annular grooved portion 22 and an annular shoulder portion 29. The grooved portion 22 is formed by recessing a part of the cylindrical portion 39 inward in the radial direction over the entire circumference in the circumferential direction by a spinning process. The sealing assembly 17 is disposed above the grooved portion 22, and is crimp-fixed to the opening portion of the housing can 16 via the resin gasket 28. The shoulder portion 29 is formed when an upper end portion of the cylindrical portion 39 is bent inward in the radial direction and is crimped to an outer edge portion of the sealing assembly 17, and extends inward in the radial direction in the upper end portion of the cylindrical portion 39.

By sealing a gap between the housing can 16 and the sealing assembly 17 with the annular gasket 28, an internal space of the battery 10 is sealed. The gasket 28 is sandwiched between the housing can 16 and the sealing assembly 17, and insulates the sealing assembly 17 from the housing can 16. The gasket 28 has a role of a seal material for maintaining the airtightness of the inside of the battery, and a role as an insulating material for insulating the sealing assembly 17 from the housing can 16. The terminal cap 27 electrically connected to the positive electrode tabs 20 serve s as the positive electrode terminal, and the housing can 16 electrically connected to the negative electrode core exposed portion 41 via the lower current collecting plate 52 serves as a negative electrode terminal.

The battery 10 comprises a tape (group holding tape) 70 attached to the outermost circumferential surface of the electrode assembly 14 so as to be across at least a part of the winding outer end 12a (see FIG. 2) of the negative electrode 12 constituting the winding outer end of the battery 10. The tape 70 is constituted of, for example, an insulating tape. The electrode assembly 14 is prevented from coming apart by attachment of the tape 70. The battery 10 comprises, for example, two tapes 70 disposed at an interval in the axial direction. The tapes 70 are attached to the outermost circumferential surface of the electrode assembly 14 over the whole circumference of the electrode assembly 14, for example. The thickness of the tape 70 is about several tens µm, and the electrode assembly 14 expands toward the outer diameter side due to expansion of the negative electrode 12 accompanied with charging and discharging. Accordingly, even when the tapes 70 are attached to the outermost circumferential surface of the electrode assembly 14, at least a part of the negative electrode core exposed portion 43 can be brought into contact with the inner circumferential surface of the housing can 16.

The battery 10 has a thin easy rupture portion 68a in the bottom 68 of the housing can 16. The easy rupture portion 68a is formed by, for example, stamping a circular or C-shaped mark on a lower surface of the bottom 68. When the easy rupture portion 68a is provided in the bottom 68, the easy rupture portion 68a ruptures if abnormal heat generation has occurred in the battery 10, so that high-temperature gas in the battery 10 can be discharged to the outside, and the safety of the battery 10 can be increased. The thin easy rupture portion may be provided in the terminal cap.

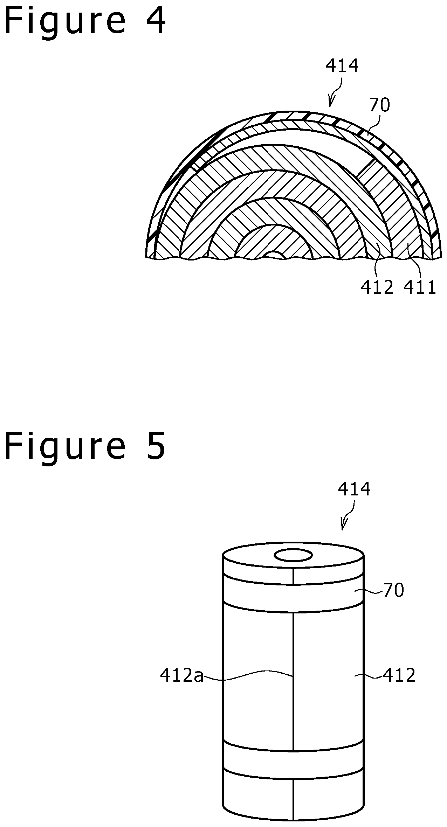

Next, advantageous effects derived from a relative position of the winding outer end 12a of the negative electrode 12 with respect to the winding outer end 11a of the positive electrode 11 will be described with reference to FIGS. 3 to 10. Note that, in the following schematic sectional views of the electrode assembly of FIGS. 4, 6, 8, and 9, the separator is not illustrated. The present inventors have found that, in the configuration in which a part of the positive electrode mixture layer is provided to be adjacent, in the positive electrode width direction, to the positive electrode core to which the positive electrode lead is joined, when the charging and discharging is performed, a gap may be generated between the winding outer side end portion of the positive electrode 11 and the negative electrode mixture layer portion facing the winding outer side end portion of the positive electrode 11, and the generated gap may cause precipitation of lithium around the negative electrode mixture layer portion. It is assumed that this is caused due to next mechanism.

As illustrated in FIG. 3, in the positive electrode 11, there exist an α layer having the positive electrode core exposed portions 35, and a β layer having no positive electrode core exposed portions 35 and constituted by only the positive electrode mixture layer 32. Since the α layer has the thin positive electrode core exposed portions 35, a radial gap is generated in a region corresponding to the α layer of the electrode assembly 14 more easily than a region corresponding to the β layer of the electrode assembly 14.

In such a background, as illustrated in FIG. 4, that is, the radial and schematic sectional view taken along the α layer in an electrode assembly 414 of Comparative Example, the α layer and the β layer are connected in the positive electrode width direction, and therefore are wound at substantially equal intervals in the radial direction before the charging and discharging, so that a gap is less likely to be generated between a positive electrode 411 and a negative electrode 412. In addition, as illustrated in FIG. 5, the tapes 70 attached so as to be across a winding outer end 412a of the negative electrode 412 of the electrode assembly 414 are not deformed.

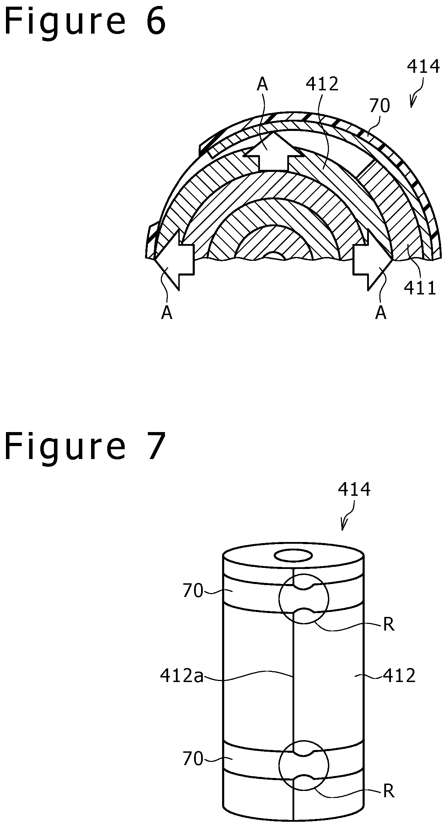

Then, when the charging is performed, the negative electrode 412 expands radially outward as indicated by arrows A in FIG. 6, so that the tape 70 receives a radially outward force. As illustrated in each region R in FIG. 7, at least a part of the tape 70 is plastically deformed to extend in the circumferential direction. The plastic deformation of the tape 70 is likely to occur in the vicinity of the winding outer end of the electrode assembly 414, that is, a winding outer end 412a of the negative electrode 412.

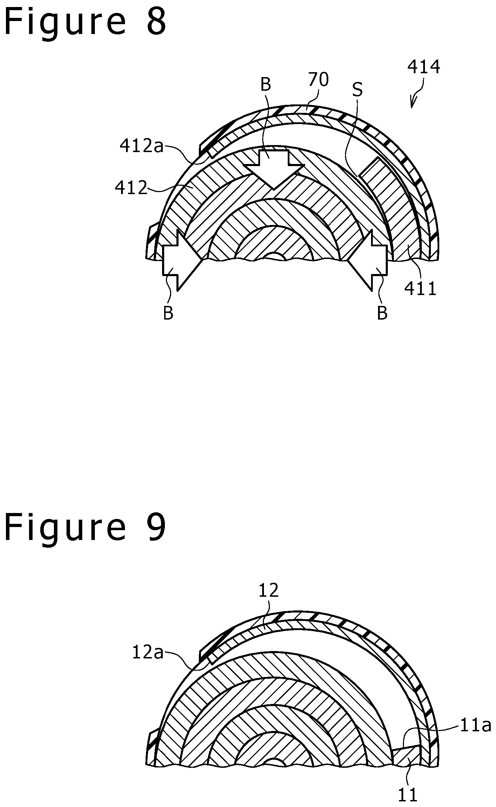

Then, when the discharging is performed, the negative electrode 412 contracts radially inward as indicated by arrows B in FIG. 8. However, since the electrode assembly 14 expands due to the plastic deformation of the tapes 70, it is assumed that a gap S is likely to be generated in the region corresponding to the α layer of the electrode assembly 14, and moreover in the winding outer side end portion with a high degree of radial movement freedom in the positive electrode 414 as illustrated in FIG. 8.

When the radial gap is generated in the electrode assembly 414, the concentration of the lithium ions in the gap is increased, facilitating the precipitation of lithium, so that the separator may be damaged. The present inventors have found that the gap can be hardly generated by the following countermeasures.

Specifically, as illustrated in FIG. 8, the gap S generated between the positive electrode 411 and the negative electrode 412 is reduced toward the winding inner side. In other words, the positive electrode 411 is less likely to move in the radial direction as the positive electrode 411 extends away from the winding outer end 412a toward the winding inner side. Accordingly, as illustrated in FIG. 9, the winding outer end 11a of the positive electrode 11 is located on the winding inner side separated from the winding outer end 12a of the negative electrode 12 by greater than or equal to a predetermined distance, so that the gap generated between the winding outer side end portion of the positive electrode 11 and the negative electrode mixture layer portion facing the winding outer side end portion of the positive electrode 11 can be reduced up to such a size that the lithium is less likely to be precipitated.

The present inventors have tentatively found such a length from the winding outer end 11a of the positive electrode 11 to the winding outer end 12a of the negative electrode 12 that the lithium is less likely to be precipitated on the outer circumferential side of the electrode assembly. Hereinafter, the batteries of Examples 1 to 6 and Comparative Example, the test contents, and the test results will be described with reference to FIG. 10. Note that in FIG. 10, (a) is a plan view representing the winding inner surface of the positive electrode 11, and (b) to (h) are plan views representing the respective winding outer surfaces of the negative electrodes 12, 112, 212, and 312. In addition, the hatched region in (a) is a region in which the positive electrode mixture layer is disposed, and the hatched region in each of (b) to (h) is a region in which the negative electrode mixture device is disposed.

### <Comparative Example>

As illustrated in (a) and (b) of FIG. 10, in the comparison with the battery comprising eight positive electrode tabs described with reference to FIGS. 1 to 3, a battery different in that the winding outer end 412a of the negative electrode 412 was located further on the winding outer side than the winding outer end 11a of the positive electrode 11 by one turn was defined as a battery of Comparative Example.

### <Example 1>

As illustrated in (a) and (c) of FIG. 10, in the battery comprising eight positive electrode tabs described with reference to FIGS. 1 to 3, a battery in which the winding outer end 12a of the negative electrode 12 was located further on the winding outer side than the winding outer end 11a of the positive electrode 11 by 5/4 turns was prepared as a battery of Example 1.

### <Example 2>

As illustrated in (a) and (d) of FIG. 10, in the battery comprising eight positive electrode tabs described with reference to FIGS. 1 to 3, a battery in which the winding outer end 12a of the negative electrode 12 was located further on the winding outer side than the winding outer end 11a of the positive electrode 11 by 3/2 turns was prepared as a battery of Example 2.

### <Example 3>

As illustrated in (a) and (e) of FIG. 10, in the battery comprising eight positive electrode tabs described with reference to FIGS. 1 to 3, a battery in which the winding outer end 12a of the negative electrode 12 was located further on the winding outer side than the winding outer end 11a of the positive electrode 11 by 2 turns was prepared as a battery of Example 3.

### <Example 4>

As illustrated in (a) and (f) of FIG. 10, in the comparison with the battery comprising eight positive electrode tabs described with reference to FIGS. 1 to 3, a battery different in that the negative electrode 112 having the winding outer end 112a with a different shape was used was prepared as a battery of Example 4. Specifically, in the battery of Example 4, a first end 133 on the positive electrode core exposed portion 35 side in the negative electrode width direction in the winding outer end 112a of the negative electrode 112 was set to be located further on the winding outer side than the winding outer end 11a of the positive electrode 11 by 3/2 turns. In addition, a second end 134 on a side opposite to the positive electrode core exposed portion 35 side in the negative electrode width direction in the winding outer end 112a of the negative electrode 112 was set to be located further on the winding outer side than the winding outer end 11a of the positive electrode 11 by one turn. In addition, the winding outer end 112a was set to be inclined toward the winding inner side from the first end 133 to the second end 134.

### <Example 5>

As illustrated in (a) and (g) of FIG. 10, in the comparison with the battery comprising eight positive electrode tabs described with reference to FIGS. 1 to 3, a battery different in that the negative electrode 212 having a winding outer end 212a with a different shape was used was prepared as a battery of Example 5. Specifically, in the battery of Example 5, a negative electrode portion located further on the positive electrode core exposed portion 35 side in the negative electrode width direction than a negative electrode width directional position radially facing a positive electrode width directional position of an end 11b on the positive electrode mixture layer 32 side in the positive electrode width direction in the positive electrode core exposed portion 35 was defined as a first portion 240. In addition, the negative electrode portion other than the first portion 240 in the negative electrode 212 was defined as a second portion 250.

Then, a first winding outer end 240a of the first portion 240 was set to be located further on the winding outer side than the winding outer end 11a of the positive electrode 11 by 3/2 turns. In addition, a first end 233 on a side opposite to the first portion 240 side in a second winding outer end 250a of the second portion 250 was set to be located further on the winding outer side than the winding outer end 11a of the positive electrode 11 by one turn. In addition, the winding outer end 212a of the negative electrode 212 was set to be inclined toward the winding inner side from a second end 234 on the second portion 250 side in the first winding outer end 240a of the first portion 240 to the first end 233.

### <Example 6>

As illustrated in (a) and (h) of FIG. 10, in the comparison with the battery comprising eight positive electrode tabs described with reference to FIGS. 1 to 3, a battery different in that the negative electrode 312 having the winding outer end 312a with a different shape was used was prepared as a battery of Example 6. Specifically, in the battery of Example 6, a negative electrode portion located further on the positive electrode core exposed portion 35 side in the negative electrode width direction than a negative electrode width directional position radially facing a positive electrode width directional position of an end 11b on the positive electrode mixture layer 32 side in the positive electrode width direction in the positive electrode core exposed portion 35 was defined as a first portion 340. In addition, the negative electrode portion other than the first portion 340 in the negative electrode 312 was defined as a second portion 350. In addition, a first winding outer end 340a of the first portion 340 was set to be located further on the winding outer side than the winding outer end 11a of the positive electrode 11 by 3/2 turns. In addition, a second winding outer end 350a of the second portion 350 was set to be located further on the winding outer side than the winding outer end 11a of the positive electrode 11 by one turn.

### (Presence or Absence of Lithium Precipitation)

For each battery, 10 samples were prepared, and for each sample, a constant voltage charging was performed until a current value reached 0.02 C at a voltage of 4.2 V after the voltage reached 4.2 V at the constant current of 0.3 C under an environmental temperature of 45°C. Then, a constant current discharging was performed until a battery voltage reached 2.3 V at a constant current of 0.2 C. After discharging, the battery as each sample was disassembled, and it was visually checked the presence or absence of the lithium precipitation around a negative electrode mixture layer facing portion radially facing the winding outer end portion of the positive electrode in the negative electrode mixture layer.

### (Measurement of Resistance Value)

For each battery, a resistance of one sample was measured. Specifically, after a constant voltage charging was performed until a voltage reached 3.75 V at 0.3 C under an environmental temperature of 25°C, a constant voltage charging was performed until 0.002 C at 3.75 V. After 2 hours of resting, a constant current discharging was performed at 0.5 C for 30 seconds. The resistance value was calculated on the basis of the following equation (1) using a voltage V0 and a voltage V1 representing a voltage after discharging at 0.5 C for 10 seconds after 2 hours of resting. The resistance value was evaluated as a relative value when the resistance value in the battery of Comparative Example is defined as 100. $Resistance value = \left(V0-V1\right) / 1.0 C$ (1)

**[Table 1]**

| | Negative electrode length with respect to positive electrode winding outer end | Structure of negative electrode winding outer side end portion | Ratio of lithium precipitation | Resistance value |
|---|---|---|---|---|
| Comparative Example | +One turn | Rectangle | 10/10 | 100 |
| Example 1 | +5/4 turns | Rectangle | 2/10 | 100 |
| Example 2 | +3/2 turns | Rectangle | 0/10 | 100 |
| Example 3 | +2 turns | Rectangle | 0/10 | 100 |
| Example 4 | +3/2 turns | Right triangle | 0/10 | 100 |
| Example 5 | +3/2 turns | Rectangle + right triangle | 0/10 | 100 |
| Example 6 | +3/2 turns | Rectangular projecting portion | 0/10 | 100 |

Test results of each battery are shown in Table 1. As shown in Table 1, the resistance values were identical for all the batteries. In the battery of Comparative Example in which the length of the negative electrode from the facing portion facing the positive electrode winding outer end (the length of the negative electrode from the positive electrode winding outer end) was one turn, the lithium precipitation was checked for all the samples. On the other hand, in the battery of Example 1 in which the length of the negative electrode from the positive electrode winding outer end was 5/4 turns, the lithium precipitation was checked for two samples, but the checked lithium precipitation was such slight that unevenness occurred in the negative electrode mixture layer. In the batteries of Examples 2 to 6 in which the length of the negative electrode from the positive electrode winding outer end was greater than or equal to 3/2 turns, the lithium precipitation could not be checked.

As a result, it was checked that when the winding outer end of the negative electrode was located further on the winding outer side than the winding outer end of the positive electrode by a length exceeding one turn, the lithium precipitation was reduced, and when the winding outer end of the negative electrode was located further on the winding outer side than the winding outer end of the positive electrode by 5/4 or more turns, the lithium precipitation was effectively reduced. In addition, it could be checked that when the winding outer end of the negative electrode was located further on the winding outer side than the winding outer end of the positive electrode by 3/2 or more turns, the lithium precipitation could be substantially prevented.

A gap on the outer circumferential side of the electrode assembly is likely to be generated in the portion corresponding to the α layer in the electrode assembly. Accordingly, the generation of the gap can be reduced by increasing the length on the side corresponding to the α layer in the negative electrode longitudinal direction in the negative electrode. This makes it possible to reduce the generation of the gap even when the length on the side corresponding to the α layer in the negative electrode longitudinal direction in the negative electrode 112, 212, 312 is longer than the minimum value of the length on the side corresponding to the β layer in the negative electrode longitudinal direction in the negative electrode 112, 212, 312 as in the batteries in Examples 4 to 6. Adopting such a configuration makes it possible not only to reduce the generation of the gap on the outer circumferential side of the electrode assembly but also to reduce the material cost of the negative electrode and the manufacturing cost of the battery as well.

In the battery with a large diameter in which the overall length in the positive electrode longitudinal direction is greater than or more than 3000 mm, or the battery with a large diameter in which a distance between a winding inner end of the negative electrode in the electrode assembly and a center axis of the housing can is greater than or equal to 5 mm, a radial stress of the battery due to negative electrode expansion during charging is easily increased. Therefore, the significant reduction effect of lithium precipitation can be obtained by adopting the configuration of the battery of the present disclosure. When the negative electrode includes Si, the negative electrode expansion is increased during charging. Accordingly, the significant reduction effect of lithium precipitation can be obtained by adopting the configuration of the battery of the present disclosure.

The cylindrical secondary battery of the present disclosure may have the following configurations.

Configuration 1: A cylindrical secondary battery comprising: an electrode assembly of an elongated positive electrode and an elongated negative electrode that are wound with a separator interposed between the positive electrode and the negative electrode;
a housing can that houses the electrode assembly; and a sealing assembly that is crimp-fixed to an opening portion of the housing can via a gasket, wherein the positive electrode has an elongated positive electrode core and a positive electrode mixture layer disposed on the positive electrode core, the negative electrode has an elongated negative electrode core and a negative electrode mixture layer disposed on the negative electrode core, the positive electrode has one or more positive electrode core exposed portions, the positive electrode core exposed portions each being adjacent to the positive electrode mixture layer in a positive electrode width direction and exposing the positive electrode core, one positive electrode tab is joined to each of the positive electrode core exposed portions, a negative electrode core exposed portion exposing the negative electrode core constitutes at least a winding outer side end portion on an outermost circumference of the electrode assembly, at least a part of the negative electrode core exposed portion contacts an inner circumferential surface of the housing can, a tape is attached to an outermost circumferential surface of the electrode assembly so as to extend across at least a part of an winding outer end of the negative electrode, and the winding outer end of the negative electrode is located further on a winding outer side than a winding outer end of the positive electrode by a length exceeding one turn.

Configuration 2: The cylindrical secondary battery described in Configuration 1, wherein the winding outer end of the negative electrode is located further on a winding outer side than the winding outer end of the positive electrode by 3/2 or more turns.

Configuration 3: The cylindrical secondary battery described in Configuration 1, wherein a first end on the positive electrode core exposed portion side in a negative electrode width direction in the winding outer end of the negative electrode is located further on a winding outer side than the winding outer end of the positive electrode by 3/2 or more turns, a second end on a side opposite to the positive electrode core exposed portion side in the negative electrode width direction in the winding outer end of the negative electrode is located further on the winding outer side than the winding outer end of the positive electrode by one or more turns, and the winding outer end of the negative electrode is inclined toward a winding inner side from the first end to the second end.

Configuration 4: The cylindrical secondary battery described in Configuration 1, wherein when a negative electrode portion located further on the positive electrode core exposed portion side in the negative electrode width direction than a negative electrode width directional position radially facing a positive electrode width directional position of an end on the positive electrode mixture layer side in the positive electrode width direction in the positive electrode core exposed portion is defined as a first portion, and a negative electrode portion other than the first portion in the negative electrode is defined as a second portion, a first winding outer end of the first portion is located further on the winding outer side than the winding outer end of the positive electrode by 3/2 or more turns, a first end on a side opposite to the first portion side in a second winding outer end of the second portion is located further on the winding outer side than the winding outer end of the positive electrode by one or more turns, and the winding outer end of the negative electrode is inclined toward a winding inner side from a second end on the second portion side in the first winding outer end of the first portion to the first end.

Configuration 5: The cylindrical secondary battery described in Configuration 1, wherein when a negative electrode portion located further on the positive electrode core exposed portion side in the negative electrode width direction than a negative electrode width directional position radially facing a positive electrode width directional position of an end on the positive electrode mixture layer side in the positive electrode width direction in the positive electrode core exposed portion is defined as a first portion, and a negative electrode portion other than the first portion in the negative electrode is defined as a second portion, a first winding outer end of the first portion is located further on the winding outer side than the winding outer end of the positive electrode by 3/2 or more turns, and a second winding outer end of the second portion is located further on the winding outer side than the winding outer end of the positive electrode by one or more turns.

Configuration 6: The cylindrical secondary battery described in any one of Configurations 1 to 5, wherein a length of the positive electrode in the positive electrode longitudinal direction is greater than or equal to 3000 mm.

Configuration 7: The cylindrical secondary battery described in any one of Configurations 1 to 6, wherein a distance between a winding inner end of the negative electrode in the electrode assembly and a center axis of the housing can is greater than or equal to 5 mm.

Configuration 8: The cylindrical secondary battery described in any one of Configurations 1 to 7, wherein the negative electrode includes Si.

### REFERENCE SIGNS LIST

10 Battery, 11 Positive electrode, 11a Winding outer end of positive electrode, 12, 112, 212, 312 Negative electrode, 12a, 112a, 212a, 312a Winding outer end of negative electrode, 13 Separator, 14 Electrode assembly, 15 Winding inner surface, 16 Housing can, 17 Sealing assembly, 18 Insulating plate, 20 Positive electrode tab, 22 Grooved portion, 27 Terminal cap, 28 Gasket, 29 Shoulder portion, 30 Positive electrode core, 32 Positive electrode mixture layer, 35 Positive electrode core exposed portion, 39 Cylindrical portion, 40 Negative electrode core, 41, 43 Negative electrode core exposed portion, 42 Negative electrode mixture layer, 43 Negative electrode core exposed portion, 50 Upper current collecting plate, 50a Through hole, 51 Metal plate, 52 Lower current collecting plate, 60 Laminating portion, 65 Recessed portion, 68 Bottom, 68a Easy rupture portion, 70 Tape, 240, 340 First portion in negative electrode, 240a, 340a First winding outer end, 250, 350 Second portion, 250a, 350a Second winding outer end.

## Claims

1. A cylindrical secondary battery, comprising:
an electrode assembly of an elongated positive electrode and an elongated negative electrode that are wound with a separator interposed between the positive electrode and the negative electrode;
a housing can that houses the electrode assembly; and
a sealing assembly that is crimp-fixed to an opening portion of the housing can via a gasket, wherein
the positive electrode has an elongated positive electrode core and a positive electrode mixture layer disposed on the positive electrode core,
the negative electrode has an elongated negative electrode core and a negative electrode mixture layer disposed on the negative electrode core,
the positive electrode has one or more positive electrode core exposed portions, the positive electrode core exposed portions each being adjacent to the positive electrode mixture layer in a positive electrode width direction and exposing the positive electrode core,
one positive electrode tab is joined to each of the positive electrode core exposed portions,
a negative electrode core exposed portion exposing the negative electrode core constitutes at least a winding outer side end portion on an outermost circumference of the electrode assembly,
at least a part of the negative electrode core exposed portion contacts an inner circumferential surface of the housing can,
a tape is attached to an outermost circumferential surface of the electrode assembly so as to extend across at least a part of an winding outer end of the negative electrode, and
the winding outer end of the negative electrode is located further on a winding outer side than a winding outer end of the positive electrode by a length exceeding one turn.

2. The cylindrical secondary battery according to claim 1, wherein the winding outer end of the negative electrode is located further on a winding outer side than the winding outer end of the positive electrode by 3/2 or more turns.

3. The cylindrical secondary battery according to claim 1, wherein
a first end on the positive electrode core exposed portion side in a negative electrode width direction in the winding outer end of the negative electrode is located further on a winding outer side than the winding outer end of the positive electrode by 3/2 or more turns,
a second end on a side opposite to the positive electrode core exposed portion side in the negative electrode width direction in the winding outer end of the negative electrode is located further on the winding outer side than the winding outer end of the positive electrode by one or more turns, and
the winding outer end of the negative electrode is inclined toward a winding inner side from the first end to the second end.

4. The cylindrical secondary battery according to claim 1, wherein
when a negative electrode portion located further on the positive electrode core exposed portion side in the negative electrode width direction than a negative electrode width directional position radially facing a positive electrode width directional position of an end on the positive electrode mixture layer side in the positive electrode width direction in the positive electrode core exposed portion is defined as a first portion, and a negative electrode portion other than the first portion in the negative electrode is defined as a second portion,
a first winding outer end of the first portion is located further on the winding outer side than the winding outer end of the positive electrode by 3/2 or more turns,
a first end on a side opposite to the first portion side in a second winding outer end of the second portion is located further on the winding outer side than the winding outer end of the positive electrode by one or more turns, and
the winding outer end of the negative electrode is inclined toward a winding inner side from a second end on the second portion side in the first winding outer end of the first portion to the first end.

5. The cylindrical secondary battery according to claim 1, wherein
when a negative electrode portion located further on the positive electrode core exposed portion side in the negative electrode width direction than a negative electrode width directional position radially facing a positive electrode width directional position of an end on the positive electrode mixture layer side in the positive electrode width direction in the positive electrode core exposed portion is defined as a first portion, and a negative electrode portion other than the first portion in the negative electrode is defined as a second portion,
a first winding outer end of the first portion is located further on the winding outer side than the winding outer end of the positive electrode by 3/2 or more turns, and
a second winding outer end of the second portion is located further on the winding outer side than the winding outer end of the positive electrode by one or more turns.

6. The cylindrical secondary battery according to claim 1, wherein a length of the positive electrode in a positive electrode longitudinal direction is greater than or equal to 3000 mm.

7. The cylindrical secondary battery according to claim 1, wherein a distance between a winding inner end of the negative electrode in the electrode assembly and a center axis of the housing can is greater than or equal to 5 mm.

8. The cylindrical secondary battery according to any one of claims 1 to 7, wherein the negative electrode includes Si.
